# EUROPÄISCHE PATENTANMELDUNG

(11) **EP 4 215 766 A1**
(43) Veröffentlichungstag der Anmeldung: **26.07.2023**
(21) Anmeldenummer: 22216359.4
(22) Anmeldetag: 23.12.2022
(51) Int. Cl.: F16B 37/06, F16B 35/06

(54) **ÜBERSTANDSLOSE BLINDNIETMUTTER ODER ÜBERSTANDSLOSER BLINDNIETGEWINDEBOLZEN**

(30) Priorität: 04.01.2022 DE 102022100104
(71) Anmelder: Honsel Umformtechnik GmbH, 58730 Fröndenberg (DE)
(72) Erfinder: Kamrad, Thomas, 44319 Dortmund (DE)
(74) Vertreter: Braun-Dullaeus Pannen Emmerling Patent- & Rechtsanwaltspartnerschaft mbB

(57) **Zusammenfassung**

Die vorliegende Erfindung betrifft eine Blindnietmutter (105) und einen Blindnietgewindebolzen zum Einbringen eines Gewindes in eine Ausnehmung eines Werkstücks und/oder zum Verbinden zweier Werkstücke, wobei die Blindnietmutter / der Blindnietgewindebolzen umfasst
einen Setzbereich (110);
einen Gewindebereich (120), wobei der Gewindebereich zumindest abschnittsweise ein Innengewinde (Blindnietmutter) oder ein Außengewinde (Blindnietgewindebolzen) aufweist;
einen Stauchbereich, wobei der Stauchbereich zwischen dem Gewindebereich und dem Setzbereich vorgesehen ist und ausgebildet ist bei einer Überschreitung einer auf ihn wirkenden ersten Kraft eine Schließwulst auszubilden, wobei der Setzbereich einen dem Stauchbereich zugewandten axialen Abschnitt und einen dem Stauchbereich abgewandten freien axialen Abschnitt (112) aufweist;
wobei der Setzbereich an seinem dem Gewindebereich abgewandten freien axialen Abschnitt bei einer Überschreitung einer auf ihn wirkenden zweiten Kraft zumindest in einer radialen Richtung hinsichtlich seiner äußeren Dimension vergrößerbar ist.

Die Blindnietmutter und der Blindnietgewindebolzen sind nach dem Einbringen / Setzen im Bauteil überstandslos (Überstand = 0mm).

## Beschreibung

### Technisches Gebiet

Die vorliegende Erfindung betrifft das technische Gebiet beim Setzen von Blindnietmutter oder Blindnietgewindebolzen, wobei die Blindnietgewindebolzen auch als Blindnietschrauben bezeichnet werden. Insbesondere betrifft die Erfindung eine Blindnietmutter oder einen Blindnietgewindebolzen, die oder der es ermöglicht überstandslos in eine Ausnehmung eines Werkstücks gesetzt zu werden. Zudem betrifft die Erfindung ein geeignetes Blindnietmutter-Setzwerkzeug oder Blindnietgewindebolzen-Setzwerkzeug zum Setzen einer solchen Blindnietmutter oder eines solchen Blindnietgewindebolzens, ein Verfahren sowie ein Montage-System zum Setzen der Blindnietmutter.

### Stand der Technik

Aus dem Stand der Technik sind Blindnietmutter bekannt, die nach dem Setzen einen Überstand aufweisen, wenn sie mit ihrem Senkkopf beispielsweise in eine glatte Bohrung eines Werkstücks eingebracht werden. Eine solche Blindnietmutter ist beispielsweise in der DE 10 2013 214 247 A1 gezeigt. Für viele Anwendungen ist ein solcher Überstand, der eine Störkante auf dem Werkstück ausbildet, unerwünscht.

In dem Stand der Technik gelingt es eine solche Störkante zu vermeiden, wenn vor dem Setzen der Blindnietmutter eine entsprechende Senkung um die Bohrung herum in dem Werkstück vorgesehen wird, wobei der Senkkopf der Blindnietmutter vollständig in die Senkung eingebracht wird.

Nachteilig ist dieses Vorsehen einer Senkung immer ein zusätzlicher Aufwand und vor allem bei dünnen Werkstücken auch aus Stabilitätsgründen nachteilig.

Der Erfindung liegt also die Aufgabe zugrunde, eine Blindnietmutter, ein Blindnietmutter-Setzwerkzeug zum Setzen einer solchen Blindnietmutter, ein

Verfahren sowie ein Montage-System zum Setzen der Blindnietmutter bereitzustellen, um ein überstandsloses oder nahezu überstandsloses Setzen der Blindnietmutter zu ermöglichen und somit die eingangs genannten Nachteile des Stands der Technik zumindest zum Teil zu beseitigen. Der Erfindung liegt zudem die Aufgabe zugrunde, einen Blindnietgewindebolzen, ein Blindnietgewindebolzen-Setzwerkzeug zum Setzen eines solchen Blindnietgewindebolzens, ein Verfahren sowie ein Montage-System zum Setzen des Blindnietgewindebolzens bereitzustellen, um ein überstandsloses oder nahezu überstandsloses Setzen des Blindnietgewindebolzens zu ermöglichen und somit die eingangs genannten Nachteile des Stands der Technik zumindest zum Teil zu beseitigen.

### Zusammenfassung der Erfindung

Die vorliegende Erfindung löst diese Aufgabe durch die Merkmale der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Erfindungsgemäß ist eine Blindnietmutter zum Einbringen eines Gewindes in eine Ausnehmung eines Werkstücks und/oder zum Verbinden zweiter Werkstücke angegeben, wobei die Blindnietmutter umfasst:
einen Setzbereich; hierbei wird derjenige Bereich der Blindnietmutter als Setzbereich bezeichnet mit dem die Blindnietmutter im Bauteil sitzt;
einen Gewindebereich, wobei der Gewindebereich zumindest abschnittsweise ein Innengewinde aufweist;
einen Stauchbereich, wobei der Stauchbereich zwischen dem Gewindebereich und dem Setzbereich vorgesehen ist und ausgebildet ist bei einer Überschreitung einer auf ihn wirkenden ersten Kraft eine Schließwulst auszubilden, wobei der Setzbereich einen dem Stauchbereich zugewandten axialen Abschnitt und einem dem Stauchbereich abgewandten freien axialen Abschnitt aufweist; da die Blindnietmutter bevorzugt einstückig ausgebildet wird, geht der Stauchbereich in diesem Fall nahtlos in den dem Stauchbereich zugewandten axialen Abschnitt des Setzbereichs über. Die Blindnietmutter weist einen inneren Hohlraum auf, sodass beispielsweise ein Gewindedorn durch den freien axialen Abschnitt hindurch in das Innere der Blindnietmutter eingeführt werden kann;

Es ist eine Kernidee der Erfindung, dass der Setzbereich an seinem dem Gewindebereich abgewandten freien axialen Abschnitt bei einer Überschreitung einer auf ihn wirkenden zweiten Kraft zumindest in einer radialen Richtung hinsichtlich seiner äußeren Dimension vergrößerbar ist. Die erste und die zweite Kraft können durch eine einzige Hubbewegung eines Blindnietmutter-Setzwerkzeug bewirkt werden und insbesondere auch im Wesentlichen gleich groß sein. In diesem Falle wären die erste und die zweite Kraft quasi eine "Einzelkraft".

Die erfindungsgemäße Blindnietmutter unterscheidet sich im Wesentlichen im Vergleich zu einer Blindnietmutter aus dem Stand der Technik, dass die erfindungsgemäße Blindnietmutter keinen Setzkopf aufweist, der beim Einbringen in eine Ausnehmung einer glatten Oberfläche eine Störkante verursacht, da dieser Setzkopf herkömmlich die Blindnietmutter in einer axialen Richtung an der Oberfläche mittels der Störkante/Setzkopf fixiert. Dadurch, dass sich der freie axiale Abschnitt des Setzbereiches - also dort wo sich bei herkömmlichen Blindnietmuttern der Setzkopf findet - durch das Ausüben der Kraft vergrößern lässt, kann die Blindnietmutter nach einem vollständigen Einbringen in eine Ausnehmung eines Werkstücks so verformt werden, dass ein Reib- und/oder Formschluss mit dem Werkstück erzeugbar ist. Auf diese Weise kann die Blindnietmutter überstandslos oder nahezu überstandslos axial an oder besser gesagt in dem Werkstück fixiert werden. Hierbei sollte die ausgeübte Kraft bevorzugt auch groß genug sein, um das Werkstück zu verformen, da ein Formschluss im allgemeinen eine bessere axiale Fixierung bietet als ein Reibschluss. Die äußeren Dimensionen der Blindnietmutter sind dergestalt kleiner als die inneren Abmessungen der Ausnehmung, sodass die Blindnietmutter mit einem kleinen Spiel in die Ausnehmung eingebracht werden kann. Bevorzugt ist die Ausnehmung lochförmig, insbesondere kann es sich bei der Ausnehmung um eine Bohrung handeln. Im Allgemeinen ist es möglich, dass die erste und die zweite Kraft gleich groß sind, sodass hierdurch sowohl die Schließwulst als auch die Verformung des freien axialen Abschnitts erzeugbar sind.

Prinzipiell genügt es, wenn die Vergrößerung entlang einer einzigen radialen Richtung erzeugt wird, beispielsweise kann die Vergrößerung entlang einer Geraden vorgenommen werden. Besonders bevorzugt erhöht es allerdings die Stabilität, wenn die Vergrößerung symmetrisch entlang mehrere Richtungen erzeugbar ist, insbesondere, wenn sich der freie axiale Abschnitt kreisförmig vergrößert. Dreidimensional entspricht diese kreisförmige Vergrößerung bevorzugt einer konus-förmigen Vergrößerung.

Die Blindnietmutter kann beispielsweise aus Stahl, Edelstahl, Kupfer, Kupferlegierung und/oder Aluminium gefertigt sein. In einer Ausführungsform ist die Blindnietmutter einstückig und in homogener Materialzusammensetzung ausgebildet, was vorteilhaft eine effiziente Herstellung der Blindnietmutter ermöglicht.

Erfindungsgemäß ist ein Blindnietgewindebolzen zum Einbringen eines Gewindes in eine Ausnehmung eines Werkstücks und/oder zum Verbinden zweiter Werkstücke, angegeben, wobei der Blindnietgewindebolzen umfasst:
einen Setzbereich;
einen Schraubenbereich, wobei eine Schraube aufweisend ein Außengewinde in dem Schraubenbereich fixiert ist; die Schraube tritt hierbei insbesondere aus dem Setzbereich heraus, sodass das Außengewinde der Schraube zum einen auf ein Mundstück eines Setzgerätes aufgespielt werden kann und/oder das nach dem Setzten des Blindnietgewindebolzens eine Mutter zum Verspannen zweier Werkstücke auf das Außengewinde aufgeschraubbar ist,
einen Stauchbereich, wobei der Stauchbereich zwischen dem Schraubenbereich und dem Setzbereich vorgesehen ist und ausgebildet ist bei einer Überschreitung einer auf ihn wirkenden ersten Kraft eine Schließwulst auszubilden, wobei der Setzbereich einen dem Stauchbereich zugewandten axialen Abschnitt und einem dem Stauchbereich abgewandten freien axialen Abschnitt aufweist;
wobei der Setzbereich an seinem dem Schraubenbereich abgewandten freien axialen Abschnitt bei einer Überschreitung einer auf ihn wirkenden zweiten Kraft zumindest in einer radialen Richtung hinsichtlich seiner äußeren Dimension vergrößerbar ist.

Die technischen Wirkungen und Vorteile eines solchen Blindnietgewindebolzen entsprechend denen, die vorstehend im Zusammenhang mit der Blindnietmutter beschrieben wurden. Eine andere Bezeichnung für den Blindnietgewindebolzen ist Blindnietschraube.

Solche erfindungsgemäßen Blindnietgewindebolzen haben in den Bauteilen oder in den Werkstücken nach dem Setzen einen Überstand von 0 mm. Somit können Bauteile oder Werkstücke vollständig ohne Störkanten aufeinander geschraubt werden.

Durch die Form und Ausführung der Hülse des Blindnietgewindebolzens ohne Kopf, jeglicher Abmessungen, kann diese unter Nutzung eines Mundstücks mit Ansatz überstandslos in ein Bauteil eingebracht werden. Die Hülse des Blindnietgewindebolzens kann unterschiedliche Formen aufweisen (rund, hexagonal, etc.), es sind weiterhin Rändel, Eindrehungen, Ansätze, etc. im Schaftbereich möglich.

Nachstehend werden vorteilhafte Ausgestaltungen, insbesondere deren technische Effekte, zumeist im Zusammenhang mit der Blindnietmutter beschrieben. Die technischen Effekte gelten allerdings für den Fachmann ersichtlich ebenfalls für den erfindungsgemäßen Blindnietgewindebolzen.

In einer bevorzugten Ausgestaltung der Blindnietmutter ist der dem Gewindebereich abgewandten Abschnitt des Setzbereichs im Wesentlichen vorsprungsfrei. In einer bevorzugten Ausgestaltung des Blindnietgewindebolzens ist der dem Schraubenbereich abgewandte Abschnitt des Setzbereichs im wesentlichen vorsprungsfrei.

Dies hat sowohl den Vorteil, dass die Blindnietmutter einfach in die Ausnehmung eingebracht werden kann. Weitere Vorteile sind wie folgt: Wäre der Vorsprung an einer Stelle angebracht, wo bei herkömmlichen Blindnietmuttern der Setzkopf ist, dann würde die Gefahr bestehen, dass bei dem Vergrößern des Setzbereichs wiederum eine Störkante entsteht, da der Vorsprung beim Ausüben der radialen Kraft auf die Oberfläche des Werkstücks gleiten könnte. Wäre der Vorsprung jedoch weiter in Richtung des Gewindebereichs der Blindnietmutter angeordnet, so würde dies zwangsläufig den Abstand des vergrößerbaren Setzbereichs zum Werkstück vergrößern, sodass der Setzbereich nachteilig stärker verformt werden müsste. Im Sinne dieses Textes werden kleinere materialbedingte Unebenheiten nicht als Vorsprünge bezeichnet.

In einer bevorzugten Ausgestaltung ist eine äußere Form der Blindnietmutter oder des Blindnietgewindebolzens zumindest größtenteils zylinderförmig, insbesondere bildet die äußere Form eine gerade Erstreckung parallel zu einer Rotationsachse bezogen auf eine längliche Erstreckung der Blindnietmutter oder des Blindnietgewindebolzens aus. Eine weitere Möglichkeit die äußere Form der Blindnietmutter oder des Blindnietgewindebolzens zu beschreiben ist, dass diese wie eine Hülse ausgebildet ist.

Dies bietet den Vorteil, dass die Blindnietmutter besonders einfach herzustellen ist und beim Einbringen in die Ausnehmung des Werkstücks einen gleichmäßigen Abstand mit einem Innenbereich des Werkstücks aufweist. Um ein leichteres Einbringen der Blindnietmutter in das Werkstück zu ermöglichen, kann der freie Gewindebereich leicht in Richtung der Längsachse der Blindnietmutter abgeknickt sein. Dieser abgeknickte Bereich ist vorzugsweise nicht länger als 10 % der Länge der Blindnietmutter. Dies ermöglicht zum einen, dass die Blindnietmutter leichter in die Ausnehmung eingebracht werden kann und dass die Blindnietmutter zum anderen dennoch über den größten Teil ihres Längenbereichs einen gleichmäßigen Abstand zu dem Innenbereich des Werkstücks aufweist.

In einer bevorzugten Ausführungsformen ist die Vergrößerung in der radialen Richtung hinsichtlich der äußeren Dimension größer als 0,1 %, bevorzugt 0,5 %, besonders bevorzugt 1 % ist.

Die Wahl, wie sehr die äußere Dimension vergrößerbar sein soll, wird auch danach zu bemessen sein, wie stark mögliche axiale Kräfte sind gegen die die Blindnietmutter fixierbar sein muss. Zudem gilt, dass je größer die Vergrößerung ausfällt, das Verhältnis von Reibschluss-Komponente zu Formschluss-Komponente mehr in Richtung Formschluss-Komponente verschoben wird. Je kleiner die Vergrößerung ausfällt, desto weniger Kraft muss auf die Blindnietmutter beim Einbringen ausgeübt werden. Demzufolge kann die Blindnietmutter auch materialtechnisch flexibler gestaltet werden. Es hat sich gezeigt, dass schon eine Vergrößerung hinsichtlich der äußeren Dimension größer als 0,1 % ausreichend ist, um bei einer Vielzahl von Anwendungsgebieten eine ausreichende axiale Fixierung der Blindnietmutter zu gewährleisten. Genügt in bestimmten Anwendungsfällen schon ein Reibschluss, dann kann die Vergrößerung auch kleiner als 0,1 % sein.

Vorzugsweise sind die erste und die zweite Kraft unterschiedlich groß.

Dies ermöglicht es, den Formschluss und/oder den Reibschluss auch in solchen Fällen zu erzeugen, wenn eine größere Kraft notwendig ist, um das Werkstück zu verformen als um die Schließwulst der Blindnietmutter zu erzeugen. Das nachstehend näher beschriebene Blindnietmutter-Setzwerkzeug kann zu diesem Zweck beispielsweise zwei verschiedene Modi aufweisen, wobei mit dem ersten Modus mittels der ersten Kraft die Schließwulst erzeugt wird und mit dem zweiten Modus mittels der zweiten Kraft der Setzbereich an dem freien axialen Abschnitt vergrößert wird.

In einer Ausführungsform ist der Gewindebereich oder der Schraubenbereich aus einem hochfesten Material ausgebildet ist, wobei der Gewindebereich oder der Schraubenbereich nicht verformbar ist.

Im Gegensatz zu herkömmlichen Blindnietmuttern muss die zweite Kraft ausreichend sein um sowohl den freien axialen Abschnitt des Setzbereichs als auch das Werkstück zu verformen. Zugleich soll aber der Gewindebereich intakt bleiben, falls die Blindnietmutter in einem späteren Zustand auch ein Gewinde in der Ausnehmung bereitstellen soll. Diese Eigenschaften ermöglichen es also vorteilhaft, dass sowohl der freie axiale Abschnitt des Setzbereichs als auch das Werkstück verformt wird und zugleich der Gewindebereich intakt bleibt. Prinzipiell ist es hierzu möglich, dass der Setzbereich und der Gewindebereich mit verschiedenen Materialien hergestellt werden, bevorzugt - weil dies in der Herstellung effizienter ist - werden der Setzbereich und der Gewindebereich allerdings aus denselben Materialien hergestellt, wobei in dem Herstellungsprozess der Setzbereich und der Gewindebereich zumindest zeitweise unterschiedlich behandelt werden, wodurch der Gewindebereich resistenter oder in anderen Worten härter gegenüber Verformungen als der Setzbereich wird. Soll die Blindnietmutter lediglich, was prinzipiell auch möglich ist, zwei Werkstück miteinander verbinden, ist es nicht zwingend nötig, dass der Gewindebereich intakt bleibt.

Gemäß einem dritten Aspekt der Erfindung ist ein Blindnietmutter-Setzwerkzeug zum Setzen der vorstehend beschriebenen Blindnietmutter angegeben, wobei das Blindnietmutter-Setzwerkzeug umfasst:
einen Gewindedorn mit zumindest einem Gewindeabschnitt, wobei die Blindnietmutter mittels des Gewindedorns aufspindelbar ist;
ein Mundstück, wobei das Mundstück den Gewindedorn umgibt;
ein Rotationsmodul in einer ersten Wirkverbindung mit dem Gewindedorn, wobei mittels des Rotationsmoduls eine Rotationsbewegung zum Auf- und/oder Abspindeln der Blindnietmutter in den Gewindedorn übertragbar ist;
ein Hubmodul in einer zweiten Wirkverbindung mit dem Gewindedorn, wobei mittels des Hubmoduls zumindest eine Hubbewegung zum Stauchen der Blindnietmutter in den Gewindedorn übertragbar ist, wobei das Mundstück ein Gegenlager für die Blindnietmutter ausbildet; das Hubmodul kann hierbei insbesondere die vorgenannte erste und/oder zweite Kraft induzieren;

Es ist hierbei ein wesentliches Merkmal, dass das Mundstück einen Anschlagabschnitt für die Blindnietmutter aufweist, wobei der Anschlagabschnitt eine Anschlagfläche aufweist, die sich in Richtung des Gewindeabschnitts verkleinert.

Der Anschlagabschnitt des Mundstücks bildet hierbei das Gegenlager, dass notwendig ist um die Blindnietmutter zu verformen, wenn durch die Hubbewegung der Gewindedorn durch das Mundstück zurückgezogen wird. In diesem Fall drückt der Setzbereich der Blindnietmutter an das Mundstück und kann verformt werden. Durch die erfindungsgemäße Form der Anschlagfläche wird ermöglicht, dass der freie axiale Setzbereich der vorstehend beschriebenen Blindnietmutter vergrößert wird und auch - eventuell in einem vorgelagerten oder nachgelagerten Prozess - die Schließwulst der Blindnietmutter erzeugt wird. Je weiter das Hubmodul also den Gewindedorn einzieht, desto tiefer drückt sich die Anschlagfläche in den freien axialen Setzbereich der Blindnietmutter und vergrößert diesen. Durch diesen vergrößerten freien axialen Setzbereich wird, wie vorstehend beschrieben, ein Form- und/oder Reibschluss mit der Ausnehmung des Werkstücks erzeugt. Der Gewindeabschnitt des Gewindedorns ist typischerweise als Gegengewinde zu dem Innengewinde der Blindnietmutter ausgestaltet.

Gemäß einem vierten Aspekt der Erfindung ist ein Blindnietgewindebolzen-Setzwerkzeug zum Setzen eines vorstehend beschriebenen Blindnietgewindebolzen angegeben, wobei das Blindnietgewindebolzen-Setzwerkzeug umfasst:
ein Mundstück, wobei das Mundstück ein Innengewinde zum Aufspindeln einer Schraube des Blindnietgewindebolzen aufweist;
ein Rotationsmodul, wobei mittels des Rotationsmoduls eine Rotationsbewegung zum Auf- und/oder Abspindeln des Blindnietgewindebolzen auf das Mundstück übertragbar ist;
ein Hubmodul, wobei mittels des Hubmoduls zumindest eine Hubbewegung zum Stauchen des Blindnietgewindebolzen in das Mundstück übertragbar ist, wobei das Mundstück ein Gegenlager für den Blindnietgewindebolzen ausbildet;
wobei das Mundstück einen Anschlagabschnitt für den Blindnietgewindebolzen aufweist, wobei der Anschlagabschnitt eine Anschlagfläche aufweist, die sich in Richtung zu dem aufspindelbaren Blindnietgewindebolzen hin verkleinert.

Die Vorteile und technische Wirkungen des Blindnietgewindebolzen-Setzwerkzeugs entsprechen im Wesentlichen dem vorstehend beschriebenen Blindnietmutter-Setzwerkzeug.

Nachstehend werden vorteilhafte Ausgestaltungen, insbesondere deren technische Effekte, zumeist im Zusammenhang mit dem Blindnietmutter-Setzwerkzeug beschrieben. Die technischen Effekte gelten allerdings für den Fachmann ersichtlich ebenfalls für das erfindungsgemäße Blindnietgewindebolzen-Setzwerkzeug.

In einer Ausführungsform vergrößert sich die Anschlagfläche kontinuierlich oder mit verschiedenen Winkeln vergrößert.

Vergrößert sich die Anschlagfläche kontinuierlich, hat dies den Vorteil, dass diese generell einfacher herzustellen ist, wobei eine Anschlagfläche mit verschiedenen Winkeln geeignet ist, um flexibel zu bestimmen, wie groß die Kraft ist die die Anschlagfläche auf die Blindnietmutter je nach Einzugstiefe des Gewindedorns ausübt. Das Material der Anschlagfläche ist bevorzugt so zu wählen, dass es durch den Setzprozess nicht verformt wird. Insbesondere soll das Material der Anschlagfläche also groß genug sein, um nicht von der die zweite Kraft verformt zu werden.

Bevorzugt weist die Anschlagfläche des Blindnietmutter-Setzwerkzeugs einen dem Gewindeabschnitt zugewandten Bereich auf der kleiner ist als ein Innenbereich des freien axialen Abschnitts des Setzbereichs der Blindnietmutter und dass die Anschlagfläche einen dem Gewindeabschnitt abgewandten Bereich aufweist der größer ist als der Innenbereich des freien axialen Abschnitts des Setzbereichs der Blindnietmutter.

Hierdurch wird vorteilhaft ermöglicht, dass die Anschlagfläche einfach in den freien axialen Abschnitt des Setzbereich der Blindnietmutter einbringbar ist und diesen bei einem fortlaufenden Einziehen des Gewindedorns in Richtung des Mundstücks vergrößert.

In einer bevorzugten Ausgestaltung ist die Anschlagfläche konusförmig ausgebildet.

Eine solche Anschlagfläche ist sowohl einfach herstellbar und führt zum anderen vorteilhaft zu einer gleichmäßigen Kraftausübung auf die Blindnietmutter und dadurch auch indirekt auf das Werkstück. Eine solch gleichmäßige Kraftausübung ist im Allgemeinen besonders effizient und führt ebenfalls zu einer gleichmäßigen axialen Fixierung. Im Allgemeinen sind solch gleichmäßige Eigenschaften vorteilhaft, weil durch sie beispielsweise Sollbruchstellen oder dergleichen verhindert werden.

Gemäß einem fünften Aspekt der Erfindung ist ein Verfahren zum Setzen der Blindnietmutter in eine Ausnehmung eines Werkstücks unter Verwendung der vorstehend beschriebenen Blindnietmutter und des vorstehend beschriebenen Blindnietmutter-Setzwerkzeugs angegeben, umfassend die folgenden Schritte:
Ansetzen der Blindnietmutter an dem Gewindedorn des Blindnietmutter-Setzwerkzeugs;
Aufspindeln der Blindnietmutter bis an die Anschlagfläche des Mundstücks;
Vollständiges Einbringen des freien axialen Setzbereichs der Blindnietmutter in die Ausnehmung des Werkstücks;
Stauchen der Blindnietmutter durch eine Hubbewegung des Blindnietmutter-Setzwerkzeugs in Richtung des Mundstückes, wobei sich durch die Hubbewegung der freie axiale Setzbereich vergrößert und in einen Formschluss und/oder einen Reibschluss mit dem Werkstück gelangt und wobei der Stauchbereich eine Schließwulst formt.

Dadurch, dass der freie axiale Setzbereich vollständig in die Ausnehmung des Werkstücks eingebracht wird, ist es möglich die Blindnietmutter zu setzen, ohne dass eine Störkante an der entsprechenden Oberfläche des Werkstücks erzeugt wird. Dies wird dadurch ermöglicht, dass nach dem vollständigen Einbringen die axiale Fixierung der Blindnietmutter durch den Form- und/oder Reibschluss realisiert wird, der erzeugt wird, wenn der freie axiale Setzbereich durch die Vergrößerung in Lochleibung mit dem Werkstück gebracht wird.

Gemäß einem sechsten Aspekt der Erfindung ist ein Verfahren zum Setzen eines Blindnietgewindebolzen in eine Ausnehmung eines Werkstücks unter Verwendung eines vorstehend beschriebenen Blindnietgewindebolzen und eines vorstehend beschriebenen Blindnietgewindebolzen-Setzwerkzeugs angegeben, umfassend die folgenden Schritte:
Aufspindeln des Blindnietgewindebolzen bis an die Anschlagfläche des Mundstücks;
Vollständiges Einbringen des freien axialen Setzbereichs der Blindnietmutter in die Ausnehmung des Werkstücks;
Stauchen des Blindnietgewindebolzens durch eine Hubbewegung des Blindnietgewindebolzen-Setzwerkzeug in entgegengesetzte Richtung des der Ausnehmung, wobei sich durch die Hubbewegung der freie axiale Setzbereich vergrößert und in einen Formschluss und/oder einen Reibschluss mit dem Werkstück gelangt und wobei der Stauchbereich eine Schließwulst formt.

Durch Einsatz des Mundstücks mit Ansatz, also der Anschlagfläche, wird der Schaft der Hülse des Blindnietgewindebolzens im Setzprozess nach außen hin aufgedrückt und in der Bohrung des Bauteils auf Lochleibung gebracht. Die Kontur des Ansatzes am Mundstück kann dabei unterschiedliche Formen haben. Durch den Setzvorgang wird der Blindnietgewindebolzen glatt bis an die Bauteiloberseite gezogen. Die Schließwulst bildet sich wie bei einem Standard Blindnietgewindebolzen. Der Blindnietgewindebolzen ist im Bauteil überstandslos gesetzt und hat somit einen Überstand 0 mm. Es entsteht keine z.B. Störkante. Ein zusätzlicher Prozess "Senken" an der Bohrung ist, wie z.B. bei Senkkopfausführungen der Blindnietgewindebolzen, nicht erforderlich.

Gemäß einem siebten Aspekt der Erfindung ist ein Montage-System zum Setzen einer Blindnietmutter oder eines Blindnietgewindebolzens angegeben umfassend
die vorstehend beschriebene Blindnietmutter oder den vorstehend beschriebenen Blindnietgewindebolzen;
das vorstehend beschriebene Blindnietmutter-Setzwerkzeug oder das vorstehend beschriebene Blindnietgewindebolzen-Setzwerkzeug;
wobei das Montage-System zur Durchführung des vorstehend beschriebenen Verfahrens eingerichtet ist.

In einer bevorzugten Ausgestaltung umfasst das Montage-System zusätzlich ein Werkstück mit der Ausnehmung in die die Blindnietmutter wie in dem Verfahren beschrieben eingebracht wird.

Weitere vorteilhafte Ausgestaltungsmerkmale der vorliegenden Erfindung sind in den Patentansprüchen definiert.

### 4. Kurze Beschreibung der Zeichnungen

Im Folgenden werden bevorzugte Ausführungsbeispiele der vorliegenden Erfindung unter Bezugnahme auf die begleitenden Figuren erläutert:
- Fig. 1:: zeigt eine Seitenansicht des erfindungsgemäßen Montage-Systems zum Setzen einer Blindnietmutter vor einem Aufspindeln der Blindnietmutter.
- Fig. 2:: zeigt eine Seitenansicht des erfindungsgemäßen Montage-Systems zum Setzen einer Blindnietmutter nach einem Aufspindeln der Blindnietmutter.
- Fig. 3:: zeigt die erfindungsgemäße Blindnietmutter in einem gesetzten Zustand in einem Werkstück als Querschnitt.
- Fig. 4:: zeigt eine vergrößerte Darstellung des Setzbereichs der Blindnietmutter aus Fig. 3, der einen Reibschluss und/oder Formschluss mit dem Werkstück erzeugt.
- Fig. 5:: zeigt eine Seitenansicht des erfindungsgemäßen Montage-Systems zum Setzen eines Blindnietgewindebolzens.
- Fig. 6: zeigt den erfindungsgemäßen Blindnietgewindebolzen in einem gesetzten Zustand in einem Werkstück als Querschnitt.

### 5. Detaillierte Beschreibung von bevorzugten Ausführungsformen

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

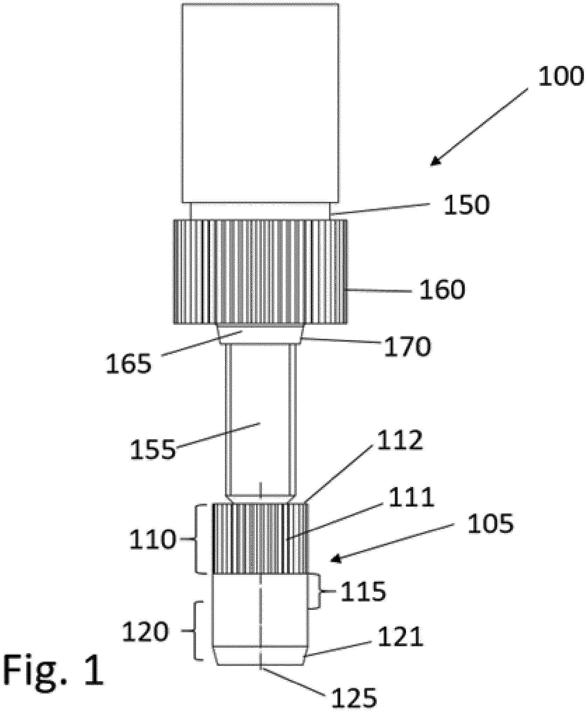

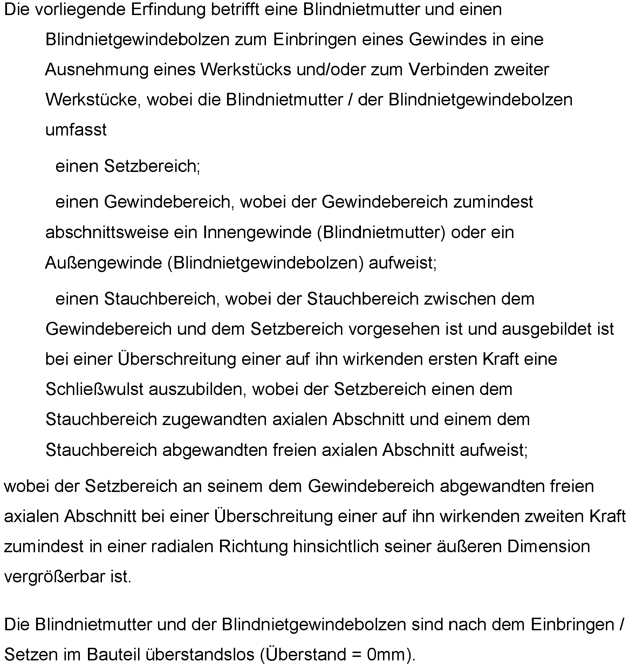

Fig. 1: zeigt eine Seitenansicht des erfindungsgemäßen Montage-Systems 100 zum Setzen einer Blindnietmutter 105 vor einem Aufspindeln der Blindnietmutter in Blindnietmutter-Setzwerkzeug 150. Das Blindnietmutter-Setzwerkzeug 150 ist in der Darstellung gemäß Fig.1 nicht vollständig gezeigt, da insbesondere ein entsprechendes zu dem Blindnietmutter-Setzwerkzeug 150 gehörendes Rotationsmodul und Hubmodul dem Fachmann bekannt sind. Von dem Blindnietmutter-Setzwerkzeug 150 sind demnach diejenigen Bestandteile gezeigt, die für die Erfindung wichtig sind bzw. die Erfindung vorteilhaft weiterbilden.

Demnach weist das Blindnietmutter-Setzwerkzeug 150 ein Gewindedorn 155 auf, der zumindest abschnittsweise an dem von dem Blindnietmutter-Setzwerkzeug 150 abgewandten Abschnitt ein nicht gezeigtes Gewinde aufweist. Der Gewindedorn 155 kann allerdings auch entlang seines gesamten in Fig. 1 gezeigten Bereichs als ein Gewinde ausgebildet sein. Der Gewindedorn 155 durchläuft koaxial ein Mundstück 160. Insbesondere durch das nicht gezeigte Hubmodul kann der Gewindedorn 155 durch das Mundstück axial verfahren werden.

Das Mundstück 160 weist einen Anschlagabschnitt 165 auf, wobei der Anschlagabschnitt 165 eine Anschlagfläche 170 aufweist, die sich in Richtung des freien Endes des Gewindedorns 155 verkleinert. Dies kann auch so formuliert werden, dass die Anschlagfläche mit ihrer größeren Fläche dem Mundstück 160 zugewandt ist und ihre kleinere Fläche dem Mundstück 160 abgewandt ist. Insbesondere hat der Anschlagabschnitt 165 eine Konusform dessen größere Fläche an dem Mundstück 160 anliegt bzw. mit diesem verbunden sein kann.

Die Blindnietmutter 105 zeigt in der Seitenansicht die Form einer Hülse. Der Gewindedorn 155 kann die Blindnietmutter 105 koaxial durchsetzen und insbesondere in ein in der Seitenansicht nicht gezeigtes Innengewinde der Blindnietmutter 105 eingreifen bzw. aufspindeln.

Die Blindnietmutter 105 weist einen Setzbereich 110, einen Stauchbereich 115 und ein Gewindebereich 120 auf. Der Setzbereich 110 ist zumindest an seinem dem Gewindebereich 120 abgewandten freien axialen Abschnitt 112 bei einer Überschreitung einer auf ihn wirkenden zweiten Kraft in radialer Richtung hinsichtlich seiner äußeren Dimension vergrößerbar. Hierzu kann die zweite Kraft insbesondere radial nach außen wirken. Prinzipiell können Abmessungen der Blindnietmutter 105 flexibel ausgestaltet sein und dementsprechend je nach der Ausnehmung des Werkstücks angepasst werden. Der Stauchbereich 115 verformt sich bei Ausübung der ersten Kraft zu einer Schließwulst. Der Gewindebereich 120 umfasst das in Fig. 1 nicht gezeigte Innengewinde, welches als Gegengewinde zu dem Gewinde des Gewindedorns 155 ausgebildet ist. Der Gewindebereich weist an seinem freien Ende einen sich konus-förmig verjüngenden Bereich 121 auf. Der sich konus-förmig verjüngende Bereich 121 ermöglicht es, dass die Blindnietmutter 105 leichter in eine Ausnehmung einbringbar ist. Durch den sich konus-förmig verjüngende Bereich 121 kann eine Selbstzentrierung der Blindnietmutter 105 in der Ausnehmung des Werkstücks hervorgerufen werden. Der Stauchbereich 115 sollte sich bis ca. 1/3 in den Rändelbereich des Setzbereichs erstrecken.

Unterschiedliche Formen, die die Blindnietmutter 105 beispielsweise annehmen kann sind ein runder Querschnitt oder ein hexagonaler Querschnitt in Bezug auf eine Längsachse 125 durch die Blindnietmutter 105. Die äußere Oberfläche der Blindnietmutter 105 des Setzbereichs 110 kann eine Relierung 111 aufweisen. Die Relierung 111 gewährleistet eine Verdrehsicherheit der Blindnietmutter 105 in der Ausnehmung des Werkstücks.

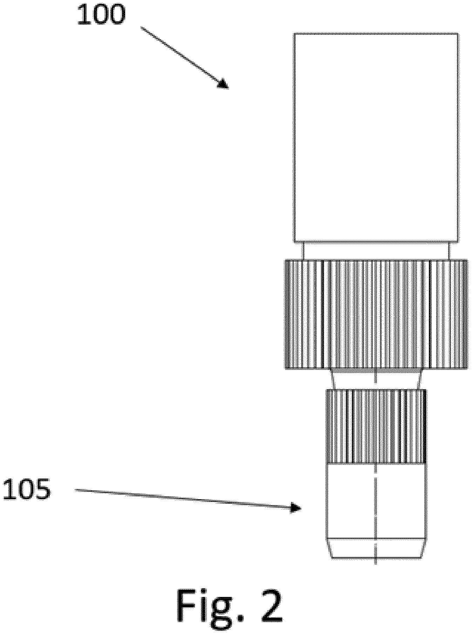

Fig. 2 zeigt die Seitenansicht des erfindungsgemäßen Montage-Systems zum Setzen einer Blindnietmutter 105 nach dem Aufspindeln der Blindnietmutter 105 auf den Gewindedorn 155. Es ist gezeigt, dass sich nach dem Aufspindeln der freien axialen Abschnitt 112 in Anlage mit der Anschlagfläche 170 befindet. Wurde nun das Hubmodul weiter in das Mundstück 125 zurückgezogen werden, übt die Anschlagfläche 170 eine Kraft mit einer radialen Komponente auf den freien axialen Abschnitt 112 aus, die zu einer Vergrößerung der Dimensionen des freien axialen Abschnitt 112 führt. Um es noch einmal klarstellend zu betonen, die radialer Kraft wird auf eine Innenseite der Blindnietmutter 105 ausgeübt. Mit anderen Worten könnte man sagen, die Blindnietmutter 105 wird an ihrem oberen Setzbereich 110 auseinandergedrückt.

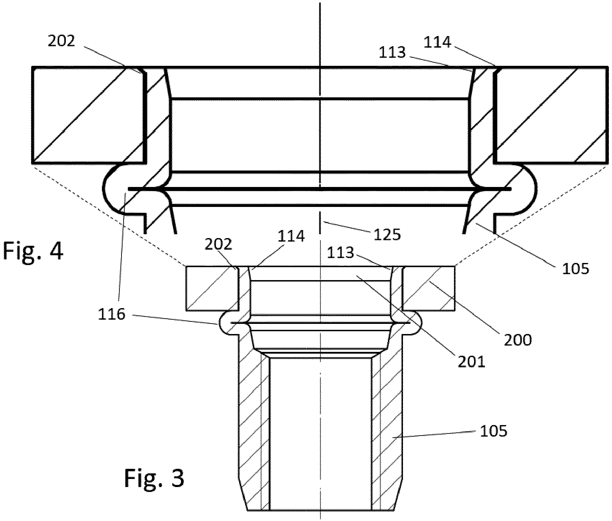

Fig. 3 zeigt die Blindnietmutter 105 in einem gesetzten Zustand in einem Werkstück 200 als Querschnitt durch die Längsachse 125 der Blindnietmutter 105. Es ist zu erkennen, dass die Blindnietmutter 105 aufgespindelt auf den Gewindedorn 155 vollständig in eine Ausnehmung 201, insbesondere in eine Bohrung 201, des Werkstücks 200 eingebracht wurde. Hierbei liegt die Blindnietmutter mit einer Kontaktfläche des freien axialen Abschnitt 112 an der Anlagefläche 170 des Mundstücks 165 an. Nach dem vollständigen Einbringen der Blindnietmutter 105 in die Bohrung 201 erzeugt das Hubmodul eine Hubbewegung, die den Gewindedorn 155 in das Mundstück 165 zurückzieht. Hierdurch werden Kräfte auf die Blindnietmutter 105 ausgeübt, die zum einen zur Erzeugung der Schließwulst 116 führen und zum anderen den freien axialen Abschnitt 112 nach außen hin in einer Art vergrößern, sodass dieser in einen Formschluss und/oder Reibschluss mit dem Werkstück 200, insbesondere mit der Innenseite der Ausnehmung 201, gelangt.

Die entsprechenden Verformungen des Werkstücks 200 und der Blindnietmutter 115 sind vergrößert in Fig. 4 dargestellt. Der vergrößerte Bereich ist durch die gestrichelten Linien angedeutet. Es ist gezeigt, dass eine obere Innenseite 113 des freien axialen Abschnitts 112 durch die Kraftausübung mittels der konus-förmigen Anlagefläche 170 quasi als konusförmiges Gegenstück ausgebildet wurde. Dies bewirkt, dass auch eine dem Gewindebereich 120 abgewandte äußere Oberfläche 114 des freien axialen Abschnitts 112 nach außen hin ausgeweitet wird, wobei dies in Fig. 4 durch einen Knickwinkel gezeigt ist. Diese Kräfte übertragen sich ebenfalls auf das Werkstück 200, sodass ein oberer Abschnitt 202 des Werkstücks 201 wiederum als Gegenstück der oberen Innenseite 113 des freien axialen Abschnitts 112 ausgebildet wird. Dies hat zur Folge, dass die Blindnietmutter 105 nunmehr in beide axiale Richtungen fixiert ist. Je nachdem wie stark die entsprechenden Deformierungen an den Stellen 114 und 202 sind, kann man von einem Formschluss oder einem Reibschluss sprechen. Meistens dürfte jedoch der Fall vorliegen, dass es sich um eine Kombination von Formschluss und Reibschluss handelt.

Die Vergrößerung des freien axialen Abschnitts 112 im Falle einer konus-förmigen Anlagefläche kann auch wie folgt beschreiben werden. In einem nicht-kraftbeaufschlagten Zustand hat der freie axialen Abschnitt 112 einen Radius R1, wobei der der freie axialen Abschnitt 112 nach der Kraftbeaufschlagung durch die zweite Kraft einen Radius R2 aufweist, wobei gilt R1 <R2.

Wie in den Figuren 3 und 4 zu sehen ist, wird die Blindnietmutter 105 in das Werkstück 200 eingebracht, ohne dass eine Störkante an einer glatten Oberfläche des Werkstücks 200 entsteht.

Auch für die nachstehenden Ausführungsbeispiele gilt, dass die technischen Effekte und Vorteile, die im Zusammenhang mit der Blindnietmutter vorstehend beschrieben sind, auch für den Blindnietgewindebolzen zutreffen.

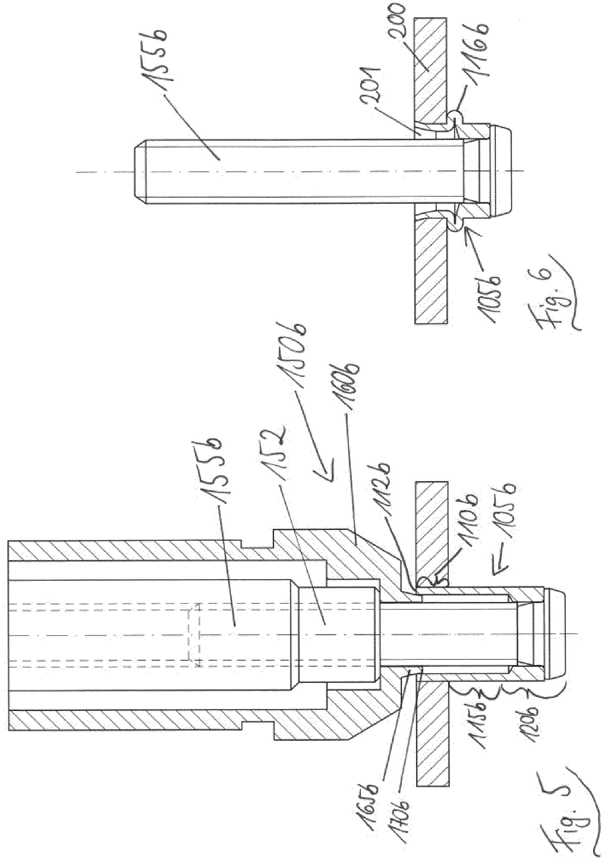

Fig. 5 zeigt eine Seitenansicht des erfindungsgemäßen Montage-Systems 100b zum Setzen eines Blindnietgewindebolzens 105b. Ein Blindnietgewindebolzen-Setzwerkzeug 150b ist in der Darstellung gemäß Fig. 5 nicht vollständig gezeigt, da insbesondere ein entsprechendes zu dem Blindnietgewindebolzen -Setzwerkzeug 150b gehörendes Rotationsmodul und Hubmodul dem Fachmann bekannt sind. Von dem Blindnietgewindebolzen-Setzwerkzeug 150b sind demnach diejenigen Bestandteile gezeigt, die für die Erfindung wichtig sind bzw. die Erfindung vorteilhaft weiterbilden.

Demnach weist das Blindnietgewindebolzen-Setzwerkzeug 150b ein Innengewinde 152 auf, auf das eine Schraube 155b des Blindnietgewindebolzen aufdrehbar ist. Die Schraube 155b durchläuft koaxial ein Mundstück 160b. Insbesondere durch das nicht gezeigte Hubmodul kann die Schraube 155b durch das Mundstück 160b axial verfahren werden.

Das Mundstück 160b weist einen Anschlagabschnitt 165b auf, wobei der Anschlagabschnitt 165b eine Anschlagfläche 170b aufweist. Die Anschlagfläche 170b ist mit ihrer größeren Fläche dem Mundstück 160b zugewandt und ist ihre kleinere Fläche dem Mundstück 160b abgewandt. Insbesondere hat der Anschlagabschnitt 165b eine Konusform dessen größere Fläche an dem Mundstück 160b anliegt bzw. mit diesem verbunden sein kann.

Der Blindnietgewindebolzen 105b zeigt in der Seitenansicht die Form einer Hülse. Die Schraube 155b kann den Blindnietgewindebolzen 105b koaxial durchsetzen und insbesondere in ein in der Seitenansicht nicht gezeigtes Außengewinde aufweisen.

Der Blindnietgewindebolzen 105b weist einen Setzbereich 110b, einen Stauchbereich 115b und ein Schraubenbereich 120b auf. Der Setzbereich 110b ist zumindest an seinem dem Schraubenbereich 120b abgewandten freien axialen Abschnitt 112b bei einer Überschreitung einer auf ihn wirkenden zweiten Kraft in radialer Richtung hinsichtlich seiner äußeren Dimension vergrößerbar. Hierzu kann die zweite Kraft insbesondere radial nach außen wirken. Prinzipiell können Abmessungen des Blindnietgewindebolzens 105b flexibel ausgestaltet sein und dementsprechend je nach der Ausnehmung des Werkstücks 200 angepasst werden. Der Stauchbereich 115b verformt sich bei Ausübung der ersten Kraft zu einer Schließwulst. Die Schraube 155b ist in dem Schraubenbereich 120b fixiert und kann eine entsprechende Kraft auf den Stauchbereich 115b, sodass sich eine Schließwulst formt. Der Schraubenbereich 120b weist an seinem freien Ende einen sich konus-förmig verjüngenden Bereich 121 auf. Der sich konus-förmig verjüngende Bereich 121 ermöglicht es, dass der Blindnietgewindebolzen 105b leichter in eine Ausnehmung des Werkstücks 200 einbringbar ist. Durch den sich konus-förmig verjüngende Bereich 121 kann eine Selbstzentrierung des Blindnietgewindebolzens 105b in der Ausnehmung des Werkstücks hervorgerufen werden. Der Stauchbereich 115 sollte sich bis ca. 1/3 in den Rändelbereich des Setzbereichs erstrecken.

Unterschiedliche Formen, die der Blindnietgewindebolzen 105b beispielsweise annehmen kann sind ein runder Querschnitt oder ein hexagonaler Querschnitt. Die äußere Oberfläche des Blindnietgewindebolzens 105b des Setzbereichs 110 kann eine Relierung 111 aufweisen. Die Relierung 111 gewährleistet eine Verdrehsicherheit des Blindnietgewindebolzens 105b in der Ausnehmung des Werkstücks.

Fig. 6 zeigt den erfindungsgemäßen Blindnietgewindebolzen 105b in einem gesetzten Zustand in dem Werkstück 200 als Querschnitt durch die Längsachse 125 des Blindnietgewindebolzens 105b. Es ist zu erkennen, dass der Setzbereich 110b des Blindnietgewindebolzen 105b vollständig in die Ausnehmung, insbesondere in eine Bohrung 201, des Werkstücks 200 eingebracht wurde und lediglich die Schraube 155b übersteht. Ein weiteres Werkstück kann nun direkt ohne Überstand auf das Werkstück aufgelegt werden, indem dieses weitere Werkstück beispielsweise ebenfalls eine Ausnehmung aufweist durch die die Schraube 155b hindurchführbar ist. Danach kann eine Mutter auf die Schraube 155b aufgedreht werden, um beide Werkstücke miteinander zu verspannen.

Nach dem vollständigen Einbringen des Blindnietgewindebolzens 105b in die Bohrung 201 und nachdem die Schraube 155b in das Innengewinde 152 aufgespielt wurde, erzeugt das Hubmodul eine Hubbewegung, die die Schraube 155b in das Mundstück 165b zurückzieht. Hierdurch werden Kräfte auf den Blindnietgewindebolzen 105b ausgeübt, die zum einen zur Erzeugung der Schließwulst 116b führen und zum anderen den freien axialen Abschnitt 112 durch eine Wechselwirkung mit der Anschlagfläche 170b nach außen hin in einer Art vergrößern, sodass dieser in einen Formschluss und/oder Reibschluss mit dem Werkstück 200, insbesondere mit der Innenseite der Ausnehmung 201, gelangt. Am Ende dieses Setzvorgangs ist der Blindnietgewindebolzen 105b zumindest auf eine Seite überstandslos in das Werkstück 200 eingesetzt.

## Patentansprüche

1. Blindnietmutter zum Einbringen eines Gewindes in eine Ausnehmung eines Werkstücks und/oder zum Verbinden zweiter Werkstücke, wobei die Blindnietmutter umfasst
einen Setzbereich;
einen Gewindebereich, wobei der Gewindebereich zumindest abschnittsweise ein Innengewinde aufweist;
einen Stauchbereich, wobei der Stauchbereich zwischen dem Gewindebereich und dem Setzbereich vorgesehen ist und ausgebildet ist bei einer Überschreitung einer auf ihn wirkenden ersten Kraft eine Schließwulst auszubilden, wobei der Setzbereich einen dem Stauchbereich zugewandten axialen Abschnitt und einem dem Stauchbereich abgewandten freien axialen Abschnitt aufweist;
**dadurch gekennzeichnet,**
**dass** der Setzbereich an seinem dem Gewindebereich abgewandten freien axialen Abschnitt bei einer Überschreitung einer auf ihn wirkenden zweiten Kraft zumindest in einer radialen Richtung hinsichtlich seiner äußeren Dimension vergrößerbar ist.

2. Blindnietgewindebolzen zum Einbringen eines Gewindes in eine Ausnehmung eines Werkstücks und/oder zum Verbinden zweiter Werkstücke, wobei der Blindnietgewindebolzen umfasst
einen Setzbereich;
einen Schraubenbereich, wobei eine Schraube aufweisend ein Außengewinde in dem Schraubenbereich fixiert ist;
einen Stauchbereich, wobei der Stauchbereich zwischen dem Schraubenbereich und dem Setzbereich vorgesehen ist und ausgebildet ist bei einer Überschreitung einer auf ihn wirkenden ersten Kraft eine Schließwulst auszubilden, wobei der Setzbereich einen dem Stauchbereich zugewandten axialen Abschnitt und einem dem Stauchbereich abgewandten freien axialen Abschnitt aufweist;
**dadurch gekennzeichnet,**
**dass** der Setzbereich an seinem dem Schraubenbereich abgewandten freien axialen Abschnitt bei einer Überschreitung einer auf ihn wirkenden zweiten Kraft zumindest in einer radialen Richtung hinsichtlich seiner äußeren Dimension vergrößerbar ist.

3. Blindnietmutter nach Anspruch 1 oder Blindnietgewindebolzen nach Anspruch 2, **dadurch gekennzeichnet, dass** der dem Gewindebereich oder dem Schraubenbereich abgewandte Abschnitt des Setzbereichs im Wesentlichen vorsprungsfrei ist.

4. Blindnietmutter nach einem der Ansprüche 1 und 3 oder Blindnietgewindebolzen nach einem der Ansprüche 2 bis 3, **dadurch gekennzeichnet, dass** eine äußere Form der Blindnietmutter oder des Blindnietgewindebolzens zylinderförmig ist, insbesondere bildet die äußere Form eine gerade Erstreckung parallel zu einer Rotationsachse bezogen auf eine längliche Erstreckung der Blindnietmutter oder des Blindnietgewindebolzens aus.

5. Blindnietmutter nach einem Ansprüche 1 und 3 bis 4 oder Blindnietgewindebolzen nach einem der Ansprüche 2 bis 4, **dadurch gekennzeichnet, dass** die Vergrößerung in der radialen Richtung hinsichtlich der äußeren Dimension größer als 0,1%, bevorzugt 0,5 %, besonders bevorzugt 1 % ist

6. Blindnietmutter nach einem Ansprüche 1 und 3 bis 5 oder Blindnietgewindebolzen nach einem der Ansprüche 2 bis 5, **dadurch gekennzeichnet, dass** die erste und die zweite Kraft unterschiedlich groß sind.

7. Blindnietmutter nach Anspruch 6 oder Blindnietgewindebolzen nach Anspruch 6, **dadurch gekennzeichnet, dass** der Gewindebereich oder der Schraubenbereich aus einem hochfesten Material ausgebildet ist, wobei der Gewindebereich durch die zweite Kraft nicht verformbar ist.

8. Blindnietmutter-Setzwerkzeug zum Setzen einer Blindnietmutter nach Anspruch 1 umfassend:
einen Gewindedorn mit zumindest einem Gewindeabschnitt, wobei die Blindnietmutter mittels des Gewindedorns aufspindelbar ist;
ein Mundstück, wobei das Mundstück den Gewindedorn umgibt;
ein Rotationsmodul in einer ersten Wirkverbindung mit dem Gewindedorn, wobei mittels des Rotationsmoduls eine Rotationsbewegung zum Auf- und/oder Abspindeln der Blindnietmutter in den Gewindedorn übertragbar ist;
ein Hubmodul in einer zweiten Wirkverbindung mit dem Gewindedorn, wobei mittels des Hubmoduls zumindest eine Hubbewegung zum Stauchen der Blindnietmutter in den Gewindedorn übertragbar ist, wobei das Mundstück ein Gegenlager für die Blindnietmutter ausbildet;
**dadurch gekennzeichnet,**
**dass** das Mundstück einen Anschlagabschnitt für die Blindnietmutter aufweist, wobei der Anschlagabschnitt eine Anschlagfläche aufweist,
die sich in Richtung des Gewindeabschnitts verkleinert.

9. Blindnietgewindebolzen-Setzwerkzeug zum Setzen eines Blindnietgewindebolzen nach Anspruch 2 umfassend:
ein Mundstück, wobei das Mundstück ein Innengewinde zum Aufspindeln einer Schraube des Blindnietgewindebolzen aufweist;
ein Rotationsmodul, wobei mittels des Rotationsmoduls eine Rotationsbewegung zum Auf- und/oder Abspindeln des Blindnietgewindebolzen auf das Mundstück übertragbar ist;
ein Hubmodul, wobei mittels des Hubmoduls zumindest eine Hubbewegung zum Stauchen des Blindnietgewindebolzen in das Mundstück übertragbar ist, wobei das Mundstück ein Gegenlager für den Blindnietgewindebolzen ausbildet;
**dadurch gekennzeichnet,**
**dass** das Mundstück einen Anschlagabschnitt für den Blindnietgewindebolzen aufweist, wobei der Anschlagabschnitt eine Anschlagfläche aufweist, die sich in Richtung zu dem aufspindelbaren Blindnietgewindebolzen hin verkleinert.

10. Blindnietmutter-Setzwerkzeug nach Anspruch 8 oder Blindnietgewindebolzen-Setzwerkzeug nach Anspruch 9, wobei sich die Anschlagfläche kontinuierlich oder mit verschiedenen Winkeln vergrößert.

11. Blindnietmutter-Setzwerkzeug nach einem der Ansprüche 8 und 10 oder Blindnietgewindebolzen-Setzwerkzeug nach einem der Ansprüche 9 is 11, wobei die Anschlagfläche konusförmig ausgebildet ist.

12. Verfahren zum Setzen eine Blindnietmutter in eine Ausnehmung eines Werkstücks unter Verwendung einer Blindnietmutter nach Anspruch 1 und eines Blindnietmutter-Setzwerkzeugs nach einem der Anspruch 8 umfassend die folgenden Schritte:
Ansetzen der Blindnietmutter an dem Gewindedorn des Blindnietmutter-Setzwerkzeugs;
Aufspindeln der Blindnietmutter bis an die Anschlagfläche des Mundstücks;
Vollständiges Einbringen des freien axialen Setzbereichs der Blindnietmutter in die Ausnehmung des Werkstücks;
Stauchen der Blindnietmutter durch eine Hubbewegung des Blindnietmutter-Setzwerkzeugs in Richtung des Mundstückes, wobei sich durch die Hubbewegung der freie axiale Setzbereich vergrößert und in einen Formschluss und/oder einen Reibschluss mit dem Werkstück gelangt und wobei der Stauchbereich eine Schließwulst formt.

13. Verfahren zum Setzen eines Blindnietgewindebolzen in eine Ausnehmung eines Werkstücks unter Verwendung eines Blindnietgewindebolzen nach Anspruch 2 und eines Blindnietgewindebolzen-Setzwerkzeug nach Anspruch 9 umfassend die folgenden Schritte:
Aufspindeln des Blindnietgewindebolzen bis an die Anschlagfläche des Mundstücks;
Vollständiges Einbringen des freien axialen Setzbereichs der Blindnietmutter in die Ausnehmung des Werkstücks;
Stauchen des lindnietgewindebolzens durch eine Hubbewegung des Blindnietgewindebolzen-Setzwerkzeug in entgegengesetzte Richtung des der Ausnehmung, wobei sich durch die Hubbewegung der freie axiale Setzbereich vergrößert und in einen Formschluss und/oder einen Reibschluss mit dem Werkstück gelangt und wobei der Stauchbereich eine Schließwulst formt.

14. Montage-System zum Setzen einer Blindnietmutter oder eines Blindnietgewindebolzens umfassend
eine Blindnietmutter nach Anspruch 1 oder einen Blindnietgewindebolzen nach Anspruch 2;
ein Blindnietmutter-Setzwerkzeug nach Anspruch 8 oder eines Blindnietgewindebolzen-Setzwerkzeugs nach Anspruch 9
wobei das Montage-System zur Durchführung des Verfahrens nach Anspruch 12 oder Anspruch 13 eingerichtet ist.
